# EUROPEAN PATENT APPLICATION

(11) **EP 1 908 804 A1**
(43) Date of publication of application: **09.04.2008**
(21) Application number: 06713605.1
(22) Date of filing: 13.02.2006
(51) Int. Cl.: C09C 3/12, C01B 33/18, C09C 1/00, C09C 1/30

(54) **PROCESS FOR PRODUCING WATER REPELLENT PARTICULATE**

(30) Priority: 29.06.2005 JP 2005018527
(71) Applicant: AGC Si-Teck Co., Ltd., Fukuoka 808-0027 (JP)
(72) Inventor: INOUE, Masaki, Asahi Glass SI-Teck Co., Ltd., Kitakyusyu-shi, Fukuoka 808-0027 (JP); YOSHIHARA, Noriyuki, Asahi Glass SI-Teck Co., Ltd., Kitakyusyu-shi, Fukuoka 808-0027 (JP); TAKEHARA, Akihiro, Asahi Glass SI-Teck Co., Ltd., Kitakyusyu-shi, Fukuoka 808-0027 (JP); SASAKI, Takayoshi, Asahi Glass SI-Teck Co., Ltd., Kitakyusyu-shi, Fukuoka 808-0027 (JP)
(74) Representative: Müller-Boré & Partner Patentanwälte
(86) International application number: PCT/JP2006/302463
(87) International publication number: WO 2007/000834

(57) **Abstract**

To provide a process of treating particulates such as an inorganic powder or resin beads to impart water repellency, to effectively impart water repellency particularly to a porous inorganic powder or the like, without use of an organic solvent as a dispersion medium of a silicone oil.

Water repellent particulates are produced by a first step of adding, to particulates, an aqueous emulsion of a silicon compound such as a silicone oil to apply surface treatment to the particulates with mixing and stirring in a dry state, and a second step of heating the treated particulates to bake the silicon compound on the surface of the particulates and to separate the aqueous medium in the emulsion. The aqueous emulsion of the silicon compound is preferably an aqueous emulsion of any one of methyl hydrogen silicone oil, dimethyl silicone oil, epoxy-modified silicone oil, amino-modified silicone oil, polyether-modified silicone oil and carboxyl-modified silicone oil.

## Description

### TECHNICAL FIELD

The present invention relates to a process for producing water repellent particulates such as a water repellent inorganic powder or water repellent resin beads, more particularly, it relates to a process for producing particulates having water repellency imparted by treating the particulates with a silicon compound.

### BACKGROUND ART

Heretofore, inorganic fine particles (hereinafter sometimes referred to as an "inorganic powder") such as silica gel particles, alumina particles, titanium oxide particles, titanium nitride particles, calcium carbonate particles, talc particles and hydroxyapatite particles have been suitably used as a filler, a pigment, a catalyst, etc. to be blended in cosmetics, resins, coating compositions, printing inks, rubbers, etc. In such a case, it is necessary to impart water repellency to the inorganic powder so as to be favorably dispersed in a cosmetic component or a resin component as the matrix.

Heretofore, various methods of treating an inorganic powder to impart water repellency have been known, and among them, a method of treating the inorganic powder with a silicon compound such as a silicone oil to impart water repellency is one of most representative methods (Patent Documents 1 and 2, Non-Patent Document 1).

In such a method, usually a silicone oil dissolved in an organic solvent is added to the inorganic powder, followed by stirring and mixing, and then the mixture is heated to remove the organic solvent and the silicone oil is baked to form a coating film.

However, in this method, since an organic solvent such as methanol or ethyl acetate is used as the dispersion medium (solvent) of the silicone oil, the organic solvent used can not be discharged to the air, and accordingly a step of recovering the organic solvent after the inorganic powder is covered with the silicone oil is required. Further, according to studies by the present inventors, water repellency is achieved with a relatively small amount of a silicone oil when the inorganic powder has a small specific surface area and a small pore volume, but as the inorganic powder becomes more porous and thereby has a large specific surface area and a large pore volume, treatment can not be conducted evenly and as a result, water repellency can not be achieved unless a large amount of a silicone oil is added.

Further, a method of adding amino-modified silicone oil to the inorganic powder without a solvent, forcibly kneading the silicone oil into the powder surface by a shearing low speed kneader such as an automatic mortar and then grinding the inorganic powder by e.g. a hummer mill, has been disclosed (Patent Document 4). However, by application of the shear force, the treated powder is inevitably grated and its shape is changed, and accordingly the powder can not be surface treated with its shape maintained, and this method is not a commonly applicable method.
Patent Document 1: JP-A-10-245546
Patent Document 2: JP-A-2003-183027
Patent Document 3: JP-A-5-339518
Patent Document 4: JP-A-2004-182729
Non-Patent Document 1: Silicone Handbook, edited by Kunio Ito, THE NIKKAN KYOGYO SHIMBUN, LTD. 1990, pages 156 to 157

### DISCLOSURE OF THE INVENTION

### OBJECT TO BE ACCOMPLISHED BY THE INVENTION

The object of the present invention is to provide a process of treating particulates to impart water repellency without using an organic solvent as a dispersion medium of a silicone oil to impart water repellency effectively particularly to porous particulates.

### MEANS TO ACCOMPLISH THE OBJECT

The present inventors have conducted extensive studies under the above circumstances and as a result, surprisingly, found the following. Namely, when particulates are treated to impart water repellency, more sufficient water repellency can be imparted by use of an aqueous emulsion of a silicone oil which has not been used, and particularly when the particulates are porous, by use of a silicone oil dissolved in an organic solvent, treatment to impart water repellency can be conducted with a remarkably small amount. The present invention has been accomplished on the basis of these discoveries.

Namely, the present invention provides a process for producing particulates as follows.
(1) A process for producing water repellent particulates, which comprising a first step of adding, to particulates, an aqueous emulsion of a silicon compound highly compatible with the particulates to apply surface treatment to the particulates with mixing and stirring in a substantially dry state, and a second step of heating the surface treated particulates to bake the silicon compound on the surface of the particulates and to separate the aqueous medium in the emulsion.
(2) The process for producing water repellent particulates according to the above (1), wherein the particulates are an inorganic powder.
(3) The process for producing water repellent particulates according to the above (2), wherein the inorganic powder is spherical silica gel or irregular silica gel.
(4) The process for producing water repellent particulates according to the above (1), wherein the particulates are resin beads.
(5) The process for producing water repellent particulates according to any one of the above (1) to (4), wherein the aqueous emulsion of the silicon compound is an aqueous emulsion of any one of methyl hydrogen silicone oil, dimethyl silicone oil, epoxy-modified silicone oil, amino-modified silicone oil, polyether-modified silicone oil and carboxyl-modified silicone oil.
(6) The process for producing water repellent particulates according to any one of the above (1) to (5), wherein the particulates are porous particles having a specific surface area of from 5 to 2,000 m²/g and a pore volume of from 0.01 to 5.0 ml/g.
(7) The process for producing water repellent particulates according to any one of the above (1) to (6), wherein the mass ratio of the silicon compound to the inorganic powder on a solid basis (mass of the silicon compound/mass of the particulates) is from 0.1/100 to 20/100.
(8) The process for producing water repellent particulates according to any one of the above (1) to (7), wherein the surface treatment in the first step is carried out for from 1 minute to 6 hours.
(9) The process for producing water repellent particulates according to any one of the above (1) to (8), wherein the heat treatment in the second step is carried out at from 50 to 250°C for from 30 minutes to 12 hours.

### EFFECTS OF THE INVENTION

The present invention provides a process to impart water repellency effectively to porous particulates with a remarkably small amount of a silicon compound as compared with conventional treatment of an inorganic powder or resin beads to impart water repellency using a silicon compound dissolved in an organic solvent.

Further, in the process of the present invention, the silicon compound is used in the form of an aqueous emulsion, and accordingly a conventional apparatus for recovering an organic solvent is unnecessary. Further, an extra energy for cooling and condensing the organic solvent is unnecessary, and thus treatment to impart water repellency can be conducted with a remarkably simple apparatus in view of process and thermal energy.

### BRIEF DESCRIPTION OF THE DRAWING

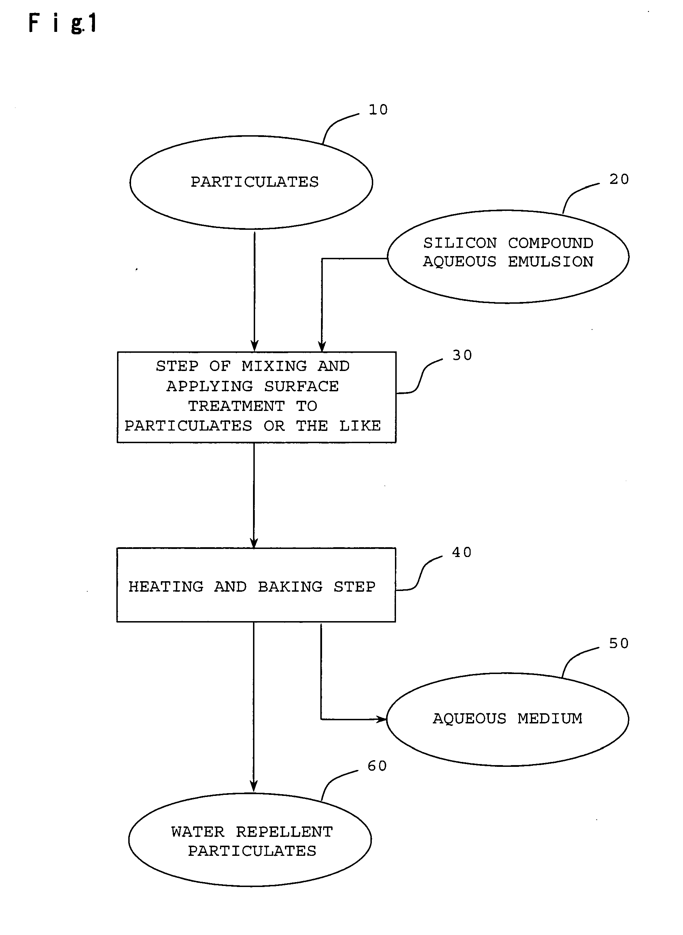

Fig. 1 is a flow sheet illustrating the process for producing water repellent particulates of the present invention.

### MEANINGS OF SYMBOLS

10: Particulates
20: Aqueous emulsion of silicon compound
30: First step of carrying out surface treatment with mixing and stirring in a dry state
40: Second step of heating treated inorganic powder or the like and carrying out baking
50: Aqueous medium
60: Water repellent particulates

### BEST MODE FOR CARRYING OUT THE INVENTION

Now, the present invention will be described in detail with reference to the drawing.

Fig. 1 is a flow sheet illustrating the process for producing water repellent particulates of the present invention. The process comprises a first step 30 of adding, to particulates 10 as a base material, an aqueous emulsion 20 of a silicon compound to apply surface treatment to the particulates with mixing and stirring in a substantially dry state, and a second step 40 of heating the treated particulates and carrying out baking. In the step 2, an aqueous medium 50 is separated and removed to obtain water repellent particulates 60.

In the present invention, higher water repellency can be imparted when the base material is porous particulates, and the present invention is applicable also to resin beads like an inorganic powder. Now, the present invention will be described in detail with reference to an inorganic powder as a preferred example of the particulates, and then described with reference to resin beads.

### (Inorganic Powder)

The inorganic powder to which the treatment to impart water repellency is applied is not particularly limited, and fine particles of the following compounds are exemplified.

Fine particles of e.g. silica (including silica gel, white carbon, Aerosyl and amorphous silica); mica; talc; sericite; kaolin; clay; bentonite; activated carbon; carbon black; an oxide such as titanium oxide (anatase, rutile), zinc oxide, magnesium oxide, ferrous oxide, ferric oxide, aluminum oxide (alumina), chromium oxide, cobalt(II) oxide, tricobalt tetroxide, cobalt(III) oxide, nickel(II) oxide, nickel(III) oxide, tungstic oxide, thorium oxide, molybdenum oxide, manganese dioxide, manganese trioxide, uranium oxide, thorium oxide, barium oxide, yttrium oxide, zirconium oxide, cuprous oxide, copper oxide, stannous oxide, stannic oxide, lead monoxide, lead tetroxide, lead dioxide, antimony trioxide, antimony pentoxide, niobium oxide, ruthenium oxide, barium titanate, silver oxide or germanium oxide; a hydroxide such as aluminum hydroxide, magnesium hydroxide, zirconium hydroxide, titanium hydroxide or chromium hydroxide; a halide such as aluminum chloride, titanium chloride, zirconium chloride or calcium fluoride; a sulfate or a sulfide such as barium sulfate, magnesium sulfate, calcium sulfate, aluminum sulfate, titanium sulfate, strontium sulfate, zinc sulfide, cadmium sulfide, antimony sulfide, calcium sulfide, silver sulfide, germanium sulfide, cobalt sulfide, tin sulfide, lead sulfide, nickel sulfide, manganese sulfide or zinc sulfide; calcium phosphate, hydroxyapatite, zeolite or aluminum phosphate; a nitride such as silicon nitride, boron nitride, magnesium nitride, titanium nitride, aluminum nitride, iron nitride, vanadium nitride, zirconium nitride, tantalum nitride, silicon nitride, a nitride of e.g. molybdenum silicate, barium silicate, magnesium silicate or strontium silicate, a nitride of e.g. aluminum silicate, a silicon compound or a silicate; or a carbide such as calcium carbide, magnesium carbide, silicon carbide, titanium carbide, tantalum carbide, zirconium carbide, tungsten carbide, molybdenum carbide, hafnium carbide, chromium carbide, vanadium carbide, boron carbide, uranium carbide or beryllium carbide, may be mentioned.

Further, fine particles of e.g. a metal such as gold, silver, palladium, rhodium, iridium, rhenium, ruthenium, osmium, nickel, copper, zinc, tin, cobalt, iron, aluminum, molybdenum, manganese, tungsten, gallium, indium, technetium, titanium, zirconium, cerium, tantalum, niobium or hafnium; or an aluminum/manganese alloy, an iron/carbon alloy, an iron/copper alloy, an iron/nickel/chromium alloy, a silver/gold alloy, a palladium/gold alloy, a silver/palladium alloy, a copper/nickel alloy, a nickel/cobalt alloy, a nickel/magnesium alloy or a tin/lead alloy, may be mentioned.

The average particle size of such an inorganic powder is not particularly limited but is usually from 0.01 to 1,000 µm, preferably from 0.1 to 100 µm, more preferably from about 1 to about 50 µm.

The above inorganic powder is preferably porous particles or a porous one. Such porous particles have a specific surface area of preferably from 5 to 2,000 m²/g, more preferably from 10 to 800 m²/g. Further, they are porous particles having a pore volume of preferably from 0.01 to 5.0 ml/g, more preferably from 0.01 to 2.0 ml/g. The specific surface area is measured by a BET method, and the pore volume is measured by a mercury intrusion method or the like.

Further, the shape of the inorganic powder is not particularly limited, and any of balls, spheres, oval spheres, irregular particles, crushed particles, cylinders, pellets, rectangular solids, needles, columns and shredded particles may be employed.

### (Silicon Compound)

The silicon compound to be used in the present invention is not particularly limited so long as it covers the surface of inorganic fine particles when contacting, attaching, adsorption or the like and in the subsequent heating step, it is baked on the surface of the inorganic powder and fixed to stably impart water repellency and it has high compatibility with the powder. For example, a so-called silicone oil (or called polysiloxane) represented by the formula (1) is preferred. Now, the present invention will be described with reference to a case of using a silicone oil as the silicon compound as an example. 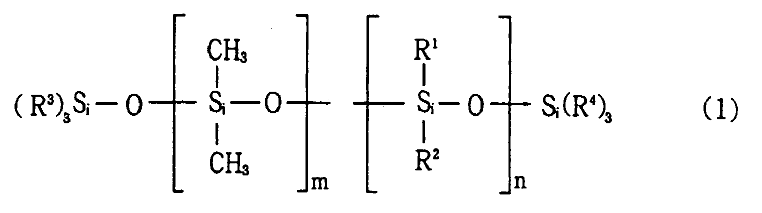 wherein each of R¹, R², R³ and R⁴ which are independent of one another, is selected from hydrogen, a C₁₋₃₀ alkyl group, an epoxy group, an amino group, a carboxyl group, an alkoxyl group, a phenyl group, a polyoxyalkylene group, a polyether group, a mercapto group and an aryl group, m is an integer of at least 1 and at most 450, and n is 0 or an integer of at least 1 and at most 450.

In the above formula, one wherein each of R¹ and R² is a substituent will be referred to as a side chain type, one wherein each of R³ and R⁴ is a substituent will be referred to as a terminal type, one wherein one of R³ and R⁴ is a substituent will be referred to as a single terminal type, and one wherein both R³ and R⁴ are substituents will be referred to as a both terminal type.

Typically, the silicone oil represented by the formula (1) may, for example, be methyl hydrogen silicone oil, dimethyl silicone oil, epoxy-modified silicone oil, amino-modified silicone oil, polyether-modified silicone oil or carboxyl-modified silicone oil.

### (Straight Silicone Oil)

Namely, a compound of the formula (1) wherein each of R¹, R², R³, R⁴ is hydrogen, an alkyl group or a phenyl group (so-called straight silicone oil) may, for example, be methyl hydrogen silicone oil (R¹=H, R², R³, R⁴=CH₃), dimethyl silicone oil (R¹, R², R³, R⁴=CH₃), diethyl silicone oil (R¹, R²=C₂H₅, R³, R⁴=CH₃), diisopropyl silicone oil (R¹, R²=C₃H₇, R³, R⁴=CH₃), dibutyl silicone oil (R¹, R²=C₄H₉, R³, R⁴=CH₃), diamyl silicone oil (R¹, R²=C₅H₁₁, R³, R⁴=CH₃), dihexyl silicone oil (R¹, R²=C₆H₁₃, R³, R⁴=CH₃), dilauryl silicone oil (R¹, R²=C₁₁H₂₃, R³, R⁴=CH₃), distearyl silicone oil (R¹, R²=C₁₇H₃₅, R³, R⁴=CH₃); methyl phenyl silicone oil (R¹=ϕ (ϕ is a phenyl group, the same applies hereinafter), R², R³, R⁴=CH₃), diphenyl silicone oil (R¹, R²= ϕ, R³, R⁴=CH₃), ethyl phenyl silicone oil (R¹=ϕ, R²= C₂H₅, R³, R⁴=CH₃), isopropyl phenyl silicone oil (R¹=ϕ, R²= C₃H₇, R³, R⁴=CH₃), butyl phenyl silicone oil (R¹=ϕ, R²= C₄H₉, R³, R⁴=CH₃), amyl phenyl silicone oil (R¹=ϕ, R²= C₅H₁₁, R³, R⁴=CH₃), hexyl phenyl silicone oil (R¹=ϕ, R²= C₆H₁₃, R³, R⁴=CH₃), lauryl phenyl silicone oil (R¹=ϕ, R²=C₁₁H₂₃, R³, R⁴=CH₃) or stearyl phenyl silicone oil (R¹=ϕ, R²=C₁₇H₃₅, R³, R⁴=CH₃).

### (Modified Silicone Oil)

Further, a so-called modified (reactive) silicone oil is one having, as at least one of R¹, R², R³ and R⁴, e.g. an epoxy group such as a glycidyl group or a glycidoxyethyl glycidoxypropyl; an amino group such as an amino group, a methylamino group, a dimethylamino group, an isopropylamino group, an anilino group, a toluidino group or a xylidino group; a carboxyl group such as a carboxyl group (also called a carboxylic acid group (-COOH)), a methoxycarbonyl group, an ethoxycarbonyl group, an isopropoxycarbonyl group, an acetoxy group or a benzoxyloxy group; an alkoxyl group such as a methoxy group, an ethoxy group, an isopropoxy group, a butoxy group or a phenoxy group; a polyoxyalkylene group; a mercapto group; an aryl group (except for a phenyl group); an alkenyl group such as a vinyl group, an isopropenyl group or an allyl group; an acyl group such as an acryloyl group, a methacryloyl group or a methacryloxypropyl; or a polyether group introduced.

### (Step of Mixing and Stirring Powder in Dry State: First Step)

In the present invention, a first step 30 is carried out in such a manner that the above silicone oil in the form of an aqueous emulsion is added to the inorganic powder and they are mixed and stirred in a substantially dry state to apply surface treatment to the powder.

The aqueous emulsion of such a silicone oil may be used as a so-called O/W type emulsion by vigorously stirring the above silicone oil together with the proper surfactant in an aqueous medium so that the silicone oil is dispersed as fine droplets in the aqueous medium. As the emulsion type, the emulsion may be properly selected from the following commercially available products. Needless to say, the inorganic powder as the base material is treated by being contacted with an aqueous medium and accordingly, one soluble in the aqueous medium is unfavorable. Here, the aqueous medium means a solvent consisting essentially of water, and it may contain a small amount of e.g. an organic solvent other than water, in addition to water.

### (Aqueous Emulsion)

The aqueous emulsion of a so-called straight silicone oil may, for example, be Polon MR, Polon MWS or Polon MK-206 (methyl hydrogen silicone oil, manufactured by Shin-Etsu Chemical Co., Ltd.), Polon MF-7, Polon MF-17, Polon MF-32, KM722A, KM740, KM742, KM782, KM785, KM786, KM787, KM788, KM797, KM860A, KM862, KM905 or KM9705 (dimethyl silicone oil emulsion, manufactured by Shin-Etsu Chemical Co., Ltd.), KM871P (methyl phenyl silicone oil emulsion, manufactured by Shin-Etsu Chemical Co., Ltd.), LE-45, LE-46, LE-48, LE-460, LE-463, LE-3430, FZ-4110, FZ-4116, FZ-4112, FZ-4129, FZ-4138, FZ-4157, FZ-4158, FZ-4170, FZ-4174, FZ-4185 or FZ-4188 (dimethyl silicone oil emulsion, manufactured by Nippon Unicar Company, Limited), BY22-007, BY22-080, BY22-029, BY22-050A, BY22-019, BY22-020, BY22-034, BY22-055 or BY22-067 (dimethyl silicone oil emulsion, manufactured by Dow Corning Toray Co., Ltd.) or TSM630, TSM631, TSM6341, TSM6343 or YMR7212 (dimethyl silicone oil emulsion, manufactured by GE Toshiba Silicone).

Further, the aqueous emulsion of a modified silicone oil may, for example, be Polon MF-18, Polon MF-24, Softenerseal-10 (epoxy-modified silicone oil emulsion, manufactured by Shin-Etsu Chemical Co., Ltd.), Polon MF-14, Polon MF-14D, Polon MF-14EC, Polon MF-29, Polon MF-39, Polon MF-44, Polon MF-52, KM907 or X-52-2265 (amino-modified silicone oil emulsion, manufactured by Shin-Etsu Chemical Co., Ltd.), LE-9300, FZ-315 or FZ-4602 (epoxy-modified silicone oil emulsion, manufactured by Nippon Unicar Company, Limited), FZ-4632, FZ-4635, FZ-4640, FZ-4645, FZ-4658, FZ-4671 or FZ-4678 (amino-modified silicone oil emulsion, manufactured by Nippon Unicar Company, Limited), FZ-4633 or FZ-4638 (carboxyl-modified silicone oil emulsion, manufactured by Nippon Unicar Company, Limited), FZ-2105 (polyether-modified silicone oil, manufactured by Nippon Unicar Company, Limited), SM8704C/SM8904 (amino-modified silicone oil emulsion, manufactured by Dow Corning Toray Co., Ltd.), HMW2220 (divinyl-modified silicone oil emulsion, manufactured by Dow Corning Toray Co., Ltd.), TEX153 (amino-modified silicone oil emulsion, manufactured by GE Toshiba Silicone), XS65-B8865 (epoxy-modified silicone oil emulsion, manufactured by GE Toshiba Silicone) or XA69-B5476 (amino polyether-modified silicone oil emulsion, manufactured by GE Toshiba Silicone)

### (Powder Mixing Apparatus)

An apparatus to carry out the first step is not particularly limited so long as it can contain the inorganic powder, supply the aqueous emulsion of the silicon compound such as the silicone oil while effectively stirring the inorganic powder, and apply surface treatment to the powder with mixing and stirring. A standing type or rotating container in which the inorganic powder is contained and/or a conventional solid mixing apparatus equipped with a solid agitating blade is used. For example, an apparatus having e.g. a V-type mixer, a double conical mixer, a ribbon type mixer, a rotating or continuous muller mixer, a vertical screw mixer, or a uniaxial or biaxial rotor type mixer equipped with an aqueous emulsion supply nozzle or dropping means can be preferably used. Further, in a case where a small amount of the inorganic powder is treated, it is possible to set a small container in which the inorganic powder and the aqueous emulsion are put to a mixing means capable of applying a motion such as turning, rocking, oscillation, figure-of-eight motion, reciprocations, up-and-down motion or piston action, and applying the desired mixing motion such as turning or oscillation rocking to the small container. Such an apparatus may, for example, be TURBULA shaker mixer (manufactured by SHINMARU ENTERPRISES CORPORATION).

In the first step, the mass ratio of the silicon compound to the inorganic powder on a solid basis may vary depending upon the type of the inorganic powder, particularly its specific surface area and pore volume. Usually, the ratio of the silicon compound mass/the inorganic powder mass is from 0.1/100 to 20/100, preferably from 1/100 to 20/100. If the amount of the silicon compound is too smaller than this range, it will be difficult to sufficiently impart water repellency, and if the amount of the silicon compound is too larger than this range, higher water repellency will no more be imparted, and such is economically meaningless. Substantially all the supplied silicon compound is fixed on the surface of the inorganic powder according to the material balance.

With respect to the mass of the silicon compound, in principle, a mass required to cover the outer surface and the area in the pores (particularly the specific surface area) of the inorganic powder should be used. According to studies by the present inventors, by use of the aqueous emulsion of the silicon compound in an amount substantially corresponding to the pore volume or the oil absorption as the basis, the mixing and stirring can be carried out in a substantially dry state in which the mixture is not wet or the mixture is not in the form of a slurry, and further, satisfactory water repellency can be imparted.

The surface treatment time with mixing and stirring in the first step may vary depending upon the type of the powder to be treated, the amount of the powder to be treated, the type and the amount of the aqueous emulsion of the silicon compound, the temperature of the inorganic powder, etc. It is usually from 1 minute to 6 hours, preferably from about 10 minutes to about 3 hours. Further, the first step may be carried out at room temperature without heating, but in some cases, it may be carried out at a temperature of from 20 to 90°C, or from about 30 to about 60°C. In a case where the first step is carried out with warming or with heating, it is preferred to use the above-described solid mixer equipped with a heating means.

### (Heating Treatment/Baking Step: Second Step)

In the present invention, a second step 40 is carried out to heat the powder treated in the first step to bake the silicon compound on the surface of the powder and separate the aqueous medium in the emulsion.

### (Heating/Drying Apparatus)

During the heating and drying, water or the like as the aqueous medium is evaporated and removed from the inorganic powder treated with the silicon compound. During this process, it is considered that particles of the silicon compound such as the silicone oil dispersed in the aqueous medium move closer into one another without being evaporated and baked on the outer surface, particularly the surface of the pores of the inorganic powder while forming a coating film.

As a preferred drying apparatus for heating and drying, any conventional dryer may suitably be used. For example, a dryer such as a box dryer, an air band dryer, a tunnel dryer, a spray dryer, a fluidized-bed dryer, a medium fluidized-bed dryer or an air rotary dryer may be used. The heat source may, for example, be water vapor, a heated medium, electric heating or infrared heating and is not particularly limited. In some cases, it is possible to add a proper heating means to the solid mixing apparatus used in the first step so that the heating treatment is carried out in the solid mixing apparatus after the first step.

The heat treatment in the second step is carried out at a temperature at which the silicon compound is strongly backed on the surface particularly the surface of the pores of the inorganic powder. Usually, it is carried out at from 50 to 250°C for from 30 minutes to 12 hours, preferably at from 80 to 200°C for from 40 minutes to 10 hours, more preferably at from 120 to 190°C for from 1 to 8 hours.

An inorganic powder 60 treated with the silicon compound as described above has high water repellency imparted, and it will not sediment at all even 24 hours after it is put in water.

According to the present invention, as described in the following Examples, it is possible to produce an inorganic powder having high water repellency with a remarkably small amount of a silicon compound as compared with conventional surface treatment by using a silicon compound dissolved in an organic solvent, by adding, to an inorganic powder, an aqueous emulsion of a silicon compound such as a silicone oil having high compatibility with the powder to apply surface treatment to the powder with mixing and stirring in a substantially dry state and by further heating the powder to bake the silicon compound on the surface of the powder.

The surface (particularly the surface of the pores in the case of porous particles) of the inorganic powder to which treatment should be applied to impart water repellency, many hydrophilic groups such as silanol groups are present, and accordingly an aqueous medium has higher compatibility with such groups and is likely to wet the surface. Thus, even with an amount smaller than the amount of the medium required to make the pores be completely filled, the aqueous medium can sufficiently wet the surface of the pores, whereby the surface can be substantially sufficiently covered with the silicone oil. Whereas, in a case where a conventional organic solvent such as ethyl acetate is used instead of the silicone oil, it is less likely to wet the surface due to hydrophilic groups on the surface, and accordingly a solvent in an amount required to make the pores be completely filled is required to completely wet the surface of the pores, whereby a remarkably large amount of a solvent will be required as compared with the aqueous medium.

### (In a Case Where the Particulates Are Resin Beads)

The above method of adding an aqueous emulsion of a silicon compound to an inorganic powder to impart water repellency is basically applicable to resin beads, and it is possible to impart high water repellency also to the resin beads.

### (Application of Resin Beads)

So-called resin beads inclusively mean fine polymer particles having an average particle size at a level of from 0.05 to 100 µm used in various industrial fields. Such resin beads (fine polymer particles) can be suitably used for cosmetic modifiers, functionalizers for coating compositions (rheology controllers), additives for toners, plastic modifiers, carriers for medical diagnostic test agents, spacers for liquid crystal, recursive reflective materials, blast release agents, decorative materials of UV inks (pseudo-etching, non-glare, embossing), etc.

Such resin beads are usually lipophilic, but their surface does not necessarily have sufficient water repellency, and some of them are compatible with water to a certain extent. Therefore, in a case where the resin beads are used for the above application particularly to a system in which presence of water should be avoided, it is considered favorable to completely impart complete water repellency to the beads so as to sufficiently obtain properties of the beads.

### (Type, Physical Properties, etc. of Resin Beads)

As the resin beads, various resins having various physical properties are selected depending upon the purpose of use, functions required, properties required, etc.

Namely, as the physical properties of the resin beads, the average particle size is from 0.05 to 100 µm, preferably from 0.1 to 50 µm, more preferably from about 1 to 20 µm.

The resin beads may be any of porous particles, nonporous particles, hollow particles and the like. They are beads having a specific surface area of preferably from 5 to 2,000 m²/g, more preferably from 10 to 800 m²/g, and a pore volume of preferably from 0.01 to 5.0 ml/g, more preferably from about 0.01 to about 2.0 ml/g. The specific surface area is measured by a BET method, and the pore volume is measured by a mercury intrusion method or the like.

The shape of the resin beads is not particularly limited, and balls or spheres are most preferred, but any of oval spheres, fusiform beads, irregular beads, crushed beads, cylinders, pellets, rings, rectangular beads, needles, columns, plates, pillars and shredded beads may be used.

The resin forming the beads is not particularly limited, and it may, for example, be preferably polyethylene, polypropylene, polybutene, polycarbonate, polyamide (nylon 6, nylon 66, nylon 620, nylon 612, nylon 11, nylon 12 or nylon 46), polyvinyl chloride, polyvinylidene chloride, a (meth)acrylic resin, polystyrene, poly α-methylstyrene, polyurethane, an epoxy resin, a phenol resin, a melamine resin or a urea resin.

### (Treatment of Resin Beads with Aqueous Emulsion of Silicone Oil)

The resin beads are treated in accordance with the process shown in Fig. 1 using the above-described aqueous emulsion of the silicone oil in the same manner as the inorganic powder.

### (Resin Beads Mixing Treatment Apparatus)

As an apparatus to carry out the mixing treatment step, the same apparatus as used for treatment of the inorganic powder may be used. For example, a V-type mixer, a double conical mixer, a ribbon type mixer, a rotating or continuous muller mixer, a vertical screw mixer, or a uniaxial or biaxial rotor type mixer may be used. Preferred is an apparatus equipped with an aqueous emulsion supply nozzle or dropping means. Further, in a case where a small amount of resin beads are treated, it is possible to set a small container in which the resin beads and an aqueous emulsion are put to a mixing means capable of applying a motion such as turning, rocking, oscillation, figure-of-eight motion, reciprocations, up-and-down motion or piston action, and applying the desired mixing motion such as turning or rocking to the small container. Such an apparatus may, for example, be TURBULA shaker mixer (manufactured by SHINMARU ENTERPRISES CORPORATION) as already described.

In the mixing treatment step, the mass ratio of the silicon compound to the resin beads on a solid basis may vary depending upon the type, porosity (specific surface area, pore volume), etc. of the resin beads. Usually, the ratio of the silicon compound mass/the resin beads mass is from 0.1/100 to 20/100. If the amount of the silicon compound is too smaller than this range, it will be difficult to sufficiently impart water repellency, and if the amount of the silicon compound is too larger than this range, higher water repellency will no more be imparted, and such is economically meaningless.

The surface treatment time with mixing and stirring may vary depending upon the type of the resin beads to be treated, the amount of the beads to be treated, the type and the amount of the aqueous emulsion of the silicon compound, the temperature of the resin beads or the aqueous emulsion, etc. It is usually from 1 minute to 6 hours, preferably from about 10 minutes to about 3 hours. Further, the mixing treatment step may be carried out at room temperature without heating, but in some cases, it may be carried out at a temperature of from 20 to 90°C, or from about 30 to about 60°C.

### (Heating Treatment/Baking Step)

In the present invention, in the same manner as the case of the inorganic powder, the mixed and treated resin beads are heated to bake the silicon compound on the surface of the resin beads and separate the aqueous medium in the emulsion.

### (Heating/Drying Apparatus)

During the heating and drying, water or the like as the aqueous medium is evaporated and removed from the resin beads treated with the silicon compound. During this process, it is considered that particles of the silicon compound such as the silicone oil dispersed in the aqueous medium move closer into one another without being evaporated and baked on the outer surface of the resin beads, particularly the surface of the pores in the case of porous beads while forming a coating film.

As a preferred drying apparatus, any conventional dryer as already described for the inorganic powder may suitably be used. For example, a dryer such as a box dryer, an air band dryer, a tunnel dryer, a spray dryer, a fluidized-bed dryer, a medium fluidized-bed dryer or an air rotary dryer may be used. The heat source may, for example, be water vapor, a heated medium, electric heating or infrared heating and is not particularly limited. In some cases, it is possible to add a proper heating means to the solid mixing apparatus used in the mixing treatment step so that the heating treatment is carried out in the solid mixing apparatus after the mixing treatment step.

The heat treatment is carried out at a temperature at which the silicon compound is strongly baked on the surface of the resin beads. Usually, it is carried out at from 50 to 250°C, preferably at from 50 to 150°C for from 30 minutes to 12 hours, more preferably at from 80 to 130°C for from 40 minutes to 10 hours.

Resin beads treated with the silicon compound as described above have high water repellency imparted, and they will not sediment at all even 24 hours after they are put in water.

### EXAMPLES

Now, the present invention will be described in further detail with reference to Examples. However, the present invention is by no means restricted to the following Examples.

### EXAMPLE 1

(1) As an inorganic powder to be surface treated, 30 g of spherical silica gel (average particle size: 5 µm, specific surface area: 119 m²/g, pore volume: 0.50 ml/g) was used. Further, as an aqueous emulsion of a silicon compound, 1.5 g of an aqueous emulsion of methyl hydrogen silicone oil (manufactured by Shin-Etsu Chemical Co., Ltd., tradename: Polon-MR) was preliminarily diluted with 14.4 mL of deionized water. The ratio of silica gel:silicone oil emulsion (as calculated as silicone oil pure solid)=100:3.
(2) The inorganic powder was put in a polyethylene container having a capacity of 1,000 mL, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface treated powder mixture was heated at 180°C for drying for 6 hours, thereby to obtain desired silica gel treated with the silicone oil to impart water repellency. 0.1 g of the silica gel was charged in a beaker in which 50 mL of water was put to confirm its water repellency, whereupon the silica gel powder did not sediment at all even after 24 hours and was confirmed to have high water repellency.

### EXAMPLE 2

(1) As an inorganic powder to be surface treated, 30 g of spherical silica gel (average particle size: 5 µm, specific surface area: 756 m²/g, pore volume: 0.88 ml/g) was used. Further, as an aqueous emulsion of a silicon compound, 2.5 g of an aqueous emulsion of methyl hydrogen silicone oil (manufactured by Shin-Etsu Chemical Co., Ltd., tradename: Polon-MR) was preliminarily diluted with 25.4 mL of deionized water. The ratio of silica gel:silicone oil emulsion (as calculated as silicone oil pure solid)=100:5.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface treated powder mixture was heated at 180°C for drying for 6 hours, thereby to obtain desired silica gel treated with the silicone oil to impart water repellency. The silica gel was charged water in the same manner as in Example 1 to confirm its water repellency, whereupon the silica gel did not sediment at all even after 24 hours and was confirmed to have high water repellency.

### EXAMPLE 3

(1) As an inorganic powder to be surface treated, 30 g of spherical silica gel (average particle size: 5 µm, specific surface area: 756 m²/g, pore volume: 0.88 ml/g) was used. Further, as an aqueous emulsion of a silicon compound, 7.5 g of an aqueous emulsion of amino-modified silicone oil (manufactured by Shin-Etsu Chemical Co., Ltd., tradename: X-52-2265, silicone oil component: 40%) was preliminarily diluted with 18.9 mL of deionized water. The ratio of silica gel:silicone oil emulsion (as calculated as silicone oil pure solid)=100:10.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface treated powder mixture was heated at 150°C for drying for 6 hours, thereby to obtain desired silica gel treated with the silicone oil to impart water repellency. The silica gel was charged in water in the same manner as in Example 1 to confirm its water repellency, whereupon the silica gel did not sediment at all even after 24 hours and was confirmed to have high water repellency.

### EXAMPLE 4

(1) As an inorganic powder to be surface treated, 30 g of spherical silica gel (average particle size: 5 µm, specific surface area: 756 m²/g, pore volume: 0.88 ml/g) was used. Further, as an aqueous emulsion of a silicon compound, 3.75 g of an aqueous emulsion of amino-modified silicone oil (manufactured by Shin-Etsu Chemical Co., Ltd., tradename: X-52-2265, silicone oil component: 40%) was preliminarily diluted with 24.5 mL of deionized water. The ratio of silica gel:silicone oil emulsion (as calculated as silicone oil pure solid)=100:5.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface treated powder mixture was heated at 150°C for drying for 6 hours, thereby to obtain desired silica gel treated with the silicone oil to impart water repellency. The silica gel was charged in water in the same manner as in Example 1 to confirm its water repellency, whereupon the silica gel did not sediment at all even after 24 hours and was confirmed to have high water repellency.

### EXAMPLE 5

(1) As an inorganic powder to be surface treated, 30 g of spherical silica gel (average particle size: 5 µm, specific surface area: 703 m²/g, pore volume: 1.85 ml/g) was used. Further, as an aqueous emulsion of a silicon compound, 7.5 g of an aqueous emulsion of amino-modified silicone oil (manufactured by Shin-Etsu Chemical Co., Ltd., tradename: X-52-2265, silicone oil component: 40%) was preliminarily diluted with 51.8 mL of deionized water. The ratio of silica gel:silicone oil emulsion (as calculated as silicone oil pure solid)=100:10.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface treated powder mixture was heated at 150°C for drying for 6 hours, thereby to obtain desired silica gel treated with the silicone oil to impart water repellency. The silica gel was charged in water in the same manner as in Example 1 to confirm the water repellency, whereupon the silica gel did not sediment at all even after 24 hours and was confirmed to have high water repellency.

### EXAMPLE 6

(1) As an inorganic powder to be surface treated, 30 g of spherical silica gel (average particle size: 5 µm, specific surface area: 703 m²/g, pore volume: 1.85 ml/g) was used. Further, as an aqueous emulsion of a silicon compound, 3.75 g of an aqueous emulsion of amino-modified silicone oil (manufactured by Shin-Etsu Chemical Co., Ltd., tradename: X-52-2265, silicone oil component: 40%) was preliminarily diluted with 53.6 mL of deionized water. The ratio of silica gel:silicone oil emulsion (as calculated as silicone oil pure solid)=100:5.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface treated powder mixture was heated at 150°C for drying for 6 hours, thereby to obtain desired silica gel treated with the silicone oil to impart water repellency. The silica gel was charged in water in the same manner as in Example 1 to confirm its water repellency, whereupon the silica gel did not sediment at all even after 24 hours and was confirmed to have high water repellency.

### EXAMPLE 7

The same experiment as in Example 6 was carried out except that the spherical silica gel in Example 2 was crushed to use crushed silica gel. The obtained crushed silica gel was charged in water in the same manner as in Example 1 to confirm its water repellency, whereupon it did not sediment at all even after 24 hours and was confirmed to have high water repellency.

### EXAMPLE 8

The same experiment as in Example 2 was carried out except that zinc oxide was used instead of the spherical silica gel. The obtained zinc oxide was charged in water in the same manner as in Example 1 to confirm its water repellency, whereupon it did not sediment at all even after 24 hours and was confirmed to have high water repellency.

### EXAMPLE 9

The same operation as in Example 2 was carried out except that the aqueous emulsion of the silicon compound was changed to an aqueous emulsion of carboxyl-modified silicone oil (manufactured by Nippon Unicar Company, Limited, tradename: FZ-4633). The ratio of silica gel:silicone oil emulsion (as calculated as silicone oil pure solid)=100:10.

The obtained spherical silica gel treated with the silicone oil to impart water repellency was charged in water in the same manner as in Example 1 to confirm its water repellency, whereupon it did not sediment at all even after 24 hours and was confirmed to have high water repellency.

### EXAMPLE 10

The same operation as in Example 2 was carried out except that the aqueous emulsion of the silicon compound was changed to an aqueous emulsion of epoxy-modified silicone oil (manufactured by Shin-Etsu Chemical Co., Ltd., tradename: Polon MF-18). The ratio of silica gel:silicone oil emulsion (as calculated as silicone oil pure solid)=100:10.

The obtained spherical silica gel treated with the silicone oil to impart water repellency was charged in water in the same manner as in Example 1 to confirm its water repellency, whereupon it did not sediment at all even after 24 hours and was confirmed to have high water repellency.

### COMPARATIVE EXAMPLE 1

(1) As an inorganic powder to be surface treated, 30 g of spherical silica gel (average particle size: 3 µm, specific surface area: 756 m²/g, pore volume: 0.88 ml/g) was used. Further, as a silicon compound, 6 g of methyl hydrogen silicone oil (manufactured by Shin-Etsu Chemical Co., Ltd., tradename: KF-99) was preliminarily diluted with 26.4 mL of ethyl acetate. The ratio of silica gel:silicone oil (as calculated as silicone oil pure solid)=100:20.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface-treated powder mixture was air dried for one day and then heated at 180°C for drying for 6 hours to obtain desired silica gel treated with the silicone oil to impart water repellency. The silica gel was charged in water in the same manner as in Example 1 to confirm its water repellency, whereupon the entire silica gel sedimented before a lapse of 24 hours, and the powder was confirmed to have no sufficient water repellency. That is, in a case where a silicone oil is dissolved in an organic solvent, even though a large amount of the silicone oil is used as compared with the case of the silicone emulsion, no sufficient water repellency can be imparted to the inorganic powder.

### COMPARATIVE EXAMPLE 2

(1) As an inorganic powder to be surface treated, 30 g of spherical silica gel (average particle size: 3 µm, specific surface area: 756 m²/g, pore volume: 0.88 ml/g) was used. Further, as a silicon compound, 9 g of dimethyl silicone oil (manufactured by Shin-Etsu Chemical Co., Ltd., tradename: KF-96) was preliminarily diluted with 26.4 mL of ethyl acetate. The ratio of silica gel:silicone oil (as calculated as silicone oil pure solid)=100:30.
(2) The inorganic powder was put in a polyethylene container having a capacity of 1,000 mL in the same manner as in Example 1, and the container was set to TURBULA shaker mixer (manufactured by SHINMARU ENTERPRISES CORPORATION) as a powder mixer. While the silicone oil emulsion was dividedly added, the powder was well mixed in a powder state for 30 minutes to apply surface treatment.
(3) The surface-treated powder mixture was air dried for one day and then heated at 180°C for drying for 6 hours to obtain desired silica gel treated with the silicone oil to impart water repellency. The silica gel was charged in water in the same manner as in Example 1 to confirm its water repellency, whereupon the entire silica gel sedimented before a lapse of 24 hours, and the powder was confirmed to have no sufficient water repellency. Namely, in a case where a silicone oil is dissolved in an organic solvent, even though a large amount of the silicone oil is used as compared with the case of the silicone emulsion, no sufficient water repellency can be imparted to the inorganic powder.

### COMPARATIVE EXAMPLE 3

The same operation as in Comparative Example 1 was carried out except that amino-modified silicone oil (manufactured by Shin-Etsu Chemical Co., Ltd., tradename: KF-8044) was used as the silicon compound. The ratio of silica gel:silicone oil=100:20.

Water repellency of the obtained spherical silica gel was confirmed, whereupon the entire silica gel sedimented before a lapse of 24 hours, and the powder was confirmed to have no sufficient water repellency. Namely, in a case where a silicone oil is dissolved in an organic solvent, even though a large amount of the silicone oil is used as compared with the case of the silicone emulsion, no sufficient water repellency can be imparted to the inorganic powder.

### EXAMPLE 11

(1) As resin beads to be surface treated, 100 g of acrylic resin beads (manufactured by IWASE COSFA CO., LTD., tradename: Microsphere-M-100, average particle size: 5 to 20 µm) were used. Further, as an aqueous emulsion of a silicon compound, 2.5 g of an aqueous emulsion of amino-modified silicone oil (manufactured by Shin-Etsu Chemical Co., Ltd., tradename: amino-modified silicone EM, silicone component: 40%) was preliminarily diluted with 2.5 mL of deionized water. The ratio of acrylic resin beads : silicone oil emulsion (as calculated as silicone oil pure solid)=100:1.
(2) The resin beads and the aqueous emulsion of the silicone oil were put in a polyethylene container having a capacity of 1,000 mL, the container was set to TURBULA shaker mixer (manufactured by SHINMARU ENTERPRISES CORPORATION) as a powder mixer, and the beads were well mixed in a powder state for 30 minutes to apply surface treatment.
(3) The surface treated resin beads mixture was heated at 100°C for drying for 2 hours to obtain desired acrylic resin beads treated with the silicone oil to impart water repellency. 0.1 g of the acrylic resin beads were charged in a beaker in which 50 mL of water was put to confirm their water repellency, whereupon the resin beads did not sediment at all even after 24 hours and were confirmed to have high water repellency. Further, the acrylic resin beads without treatment to impart water repellency by the process of the present invention were charged in water, whereupon they quickly sedimented.

### EXAMPLE 12

The same experiment as in Example 10 was carried out except that the resin beads to be treated were nylon resin beads (manufactured by IWASE COSFA CO., LTD., tradename: ORGASOL 2002 EXD NAT 1, average particle size: 10 µm, specific surface area: 1.5 m²/g). The obtained nylon resin beads were charged in water in the same manner, whereupon the beads did not sediment at all even after 24 hours and were confirmed to have high water repellency. Further, the nylon resin beads without treatment to impart water repellency by the process of the present invention were charged in water, whereupon they quickly sedimented.

### INDUSTRIAL APPLICABILITY

According to the present invention, particulates having high water repellency, such as a water repellent inorganic powder or water repellent resin beads can be produced with a remarkably small amount of a silicon compound as compared with conventional surface treatment by using a silicon compound dissolved in an organic solvent, by adding, to particulates, an aqueous emulsion of a silicon compound such as a silicone oil having high compatibility with the particulates to apply surface treatment to the particulates with mixing and stirring in a substantially dry state, and heating the treated particulates to bake the silicon compound on the surface of the particulates and to separate the aqueous medium in the emulsion.

Further, in the process of the present invention, the silicon compound is used in the form of an aqueous emulsion. Accordingly, a conventional apparatus for recovering an organic solvent is unnecessary, and further, an extra energy for cooling and condensing the organic solvent is unnecessary, and thus the process of the present invention can be carried out by a remarkably simple apparatus in view of process and thermal energy.

The inorganic powder having high water repellency imparted obtained by the process of the present invention can be suitably used as a filler, a pigment, a catalyst, etc. to be blended in cosmetics, resins, coating compositions, printing inks, rubbers, etc. Further, the resin beads having high water repellency imparted can be suitably used for cosmetic modifiers, functionalizers for coating compositions, additives for toners, plastic modifiers, carriers for medical diagnostic test agents, spacers for liquid crystal, recursive reflective materials, blast release agents, decorative materials of UV inks, etc.

The entire disclosure of Japanese Patent Application No. 2005-189527 filed on June 29, 2005 including specification, claims, drawings and summary is incorporated herein by reference in its entirety.

## Claims

1. A process for producing water repellent particulates, which comprising a first step of adding, to particulates, an aqueous emulsion of a silicon compound highly compatible with the particulates to apply surface treatment to the particulates with mixing and stirring in a substantially dry state, and a second step of heating the surface treated particulates to bake the silicon compound on the surface of the particulates and to separate the aqueous medium in the emulsion.

2. The process for producing water repellent particulates according to Claim 1, wherein the particulates are an inorganic powder.

3. The process for producing water repellent particulates according to Claim 2, wherein the inorganic powder is spherical silica gel or irregular silica gel.

4. The process for producing water repellent particulates according to Claim 1, wherein the particulates are resin beads.

5. The process for producing water repellent particulates according to any one of Claims 1 to 4, wherein the aqueous emulsion of the silicon compound is an aqueous emulsion of any one of methyl hydrogen silicone oil, dimethyl silicone oil, epoxy-modified silicone oil, amino-modified silicone oil, polyether-modified silicone oil and carboxyl-modified silicone oil.

6. The process for producing water repellent particulates according to any one of Claims 1 to 5, wherein the particulates are porous particles having a specific surface area of from 5 to 2,000 m²/g and a pore volume of from 0.01 to 5.0 ml/g.

7. The process for producing water repellent particulates according to any one of Claims 1 to 6, wherein the mass ratio of the silicon compound to the inorganic powder on a solid basis (mass of the silicon compound/mass of the inorganic powder) is from 0.1/100 to 20/100.

8. The process for producing water repellent particulates according to any one of Claims 1 to 7, wherein the surface treatment in the first step is carried out for from 1 minute to 6 hours.

9. The process for producing water repellent particulates according to any one of Claims 1 to 8, wherein the heat treatment in the second step is carried out at from 50 to 250°C for from 30 minutes to 12 hours.
